# EUROPEAN PATENT APPLICATION

(11) **EP 2 506 159 A1**
(43) Date of publication of application: **03.10.2012**
(21) Application number: 11002743.0
(22) Date of filing: 01.04.2011
(51) Int. Cl.: G06F 17/30

(54) **Method for providing multimedia related information to a plurality of users, method for updating at least one index file, system for providing multimedia related information to a plurality of users, program, and computer program product**

(71) Applicant: Deutsche Telekom AG, 53113 Bonn (DE)
(72) Inventor: Harrer, Björn, 64293 Darmstadt (DE)
(74) Representative: Schwöbel, Thilo K.

(57) **Abstract**

The invention related to a method for providing multimedia related information to a plurality of users, a method for updating at least one index file, a system, a program comprising a computer readable program code, and a computer program product, wherein the users provide search queries and expect receiving search results, wherein a publication data base server and a plurality of frontend servers are used, wherein the publication data base server comprises or is assigned to a publication relational data base, wherein the plurality of frontend servers comprise each or is assigned each to at least one index file,
- wherein the method comprises an indexing step for generating the index file based on the data of the publication relational data base, the indexing step for generating the at least one index file comprising:
- defining a plurality of pieces of search query information,
- assigning one piece of search result information or a plurality of pieces of search result information to each piece of search query information,

- wherein the method further comprises an answering step using the at least one index file, the answering step comprising:
- using one of the plurality of frontend servers for
- returning to the user the one piece of search result information or the plurality of pieces of search result information relating to the search query information.

## Description

### BACKGROUND

The present invention relates to a method for providing multimedia related information to a plurality of users. Furthermore, the present invention relates to a method for updating at least one index file, to a system for providing multimedia related information to a plurality of users, to a program, and to a computer program product.

A known approach to provide users with search results relating to search queries of such users is typically to provide an application server that is connected to a relational data base. The application server and the relational data base is typically connected by means of a middleware, i.e. the middleware acts as an intermediate layer between the application server on the one hand and the relational data base on the other hand. Thereby, it is typically possible to abstract the access to the data base.

Unfortunately, this approach also means- especially through the realization of an abstraction of the data base by means of the middleware - that a comparably important load is generated at the data base.

Therefore, the use of such an approach of using a relational data base is limited in terms of users accessing the data base per time unit or per time interval, which means that the scalability of such an approach is limited.

Furthermore, this approach has the drawback that any modifications in the result of data base queries, e.g. in the structure of the results of a data base query, requires typically modification of the middleware such that the effort of maintaining the middleware up to date is quite important.

One objective of the present invention is to simplify the publication of multimedia related information, especially to a multitude of different users requesting such multimedia related information, especially information related to video data and/or audio data of television programmes or television channels or other multimedia content information.

### SUMMARY

The object of the present invention is to suggest a method for providing multimedia related information to a plurality of users that is easily scalable and efficient in publishing the multimedia related information. Furthermore, the object of the present invention is to provide a method for updating at least one index file of or assigned to a plurality of frontend servers such that a separation of the updating of the stored data on the one hand and the publication or distribution of these data is easily and efficiently possible, especially combined with an increased level of scalability.

The object of the present invention is achieved by a method for providing multimedia related information to a plurality of users, wherein the users provide search queries and expect receiving search results, wherein a publication data base server and a plurality of frontend servers are used, wherein the publication data base server comprises or is assigned to a publication relational data base, wherein the plurality of frontend servers comprise each or is assigned each to at least one index file,
- wherein the method comprises an indexing step for generating the index file based on the data of the publication relational data base, the indexing step for generating the at least one index file comprising:
   - the definition of a plurality of pieces of search query information,
   - the assignment of one piece of search result information or a plurality of pieces of search result information to each piece of search query information,
- wherein the method further comprises an answering step using the at least one index file, the answering step comprising the use one of the plurality of frontend servers for returning to the user the one piece of search result information or the plurality of pieces of search result information relating to the search query information.

According to the present invention, it is thereby advantageously possible to separate the distribution process of the multimedia related information from the use of a relational data base. Thereby, it is possible according to the present invention that a high degree of scalability can be achieved: In case that an increased load (i.e. search queries per time unit or per time interval) are expected, it is possible to simply add further frontend servers, each server being able to typically handle a certain number of search queries per time interval or time unit, e.g. 5000 queries or requests per second.

Additionally, it is advantageously possible according to the present invention that a separation of:
- the updating process of the multimedia related information on the one hand, and
- the distribution process of the multimedia related information on the other hand can be realized. This ensures that the data base can be easily updated (e.g. new entries added or specific information (e.g. pricing information) relating to existing entries changed or the like) and the updated information be distributed via the plurality of frontend servers.

According to the present invention, an important goal to be achieved by means of the inventive method and system is to provide a comparably high degree of scalability, even if a reduced transaction security is involved.

It is a further advantage of the method according to the present invention is that the middleware that is typically used in conventional systems (to act as an intermediate layer between the application server on the one hand and the relational data base on the other hand) is not necessarily used for the distribution of the multimedia related information. Therefore, it is advantageously possible to reduce the (usually continuous) effort to update this middleware.

According to the present invention, the multimedia related information are preferably so-called publication data or publication information, i.e. data or information that is to be publicised in (more or less) unchanged form, i.e. the multimedia related information are relatively static information that do not need to be dynamically generated at the reception of a user's request.

A further advantage of the present invention is the possibility to easily and effectively provide testing environments and/or development environments with respect to the multimedia related information or data. This is because an application, e.g. a test application that is later on to be used by a user, e.g. for searching purposes, is able to retrieve multimedia related information (i.e. for example metadata information) even if the source of the multimedia related data is not present. According to the present invention, it is easily possible to conserve (or "freeze") a given the state of the multimedia related information by means of copying or replicating the content of one of the frontend servers or a plurality of the frontend servers. Thereby, it is easily possible to provide realistic and nevertheless stable conditions for performing testing or development of system components. This is an important aspect of the present invention as the costs associated with the provision of testing environments are an important part in the development of networked systems.

According to the present invention, it is preferred that the indexing step and the answering step is provided by means of at least one search engine.

Furthermore, it is preferred according to the present invention that the at least one index file is a flat file.

By means of using a search engine and a flat file, it is advantageously possible to avoid a data base query in a deeply structured data base structure or data base file which would be time consuming for each individual search query requested by a user. Instead, the results of possible search queries are pre-processed and stored in the index file such that they are easy retrievable.

Still furthermore, it is preferred according to the present invention that in case of a multitude of user queries per time interval, the multitude of user queries are handled by the plurality of frontend servers such that a first part of the multitude of user queries per time interval is handled by a first frontend server and a second part of the multitude of user queries per time interval is handled by a second frontend server.

Thereby, it is advantageously possible to provide for a high degree of scalability of the inventive method as it is possible to simply add further frontend servers in case that an increased load is expected.

The present invention also relates to a method for updating at least one index file of or assigned to a plurality of frontend servers, wherein a publication data base server is used with the plurality of frontend servers, wherein the publication data base server comprises or is assigned to a publication relational data base,
- wherein the method comprises a first updating step for updating the publication relational data base, and
- wherein the method comprises a second updating step for updating the at least one index file,
   wherein the second updating step comprises an updating process of the plurality of frontend servers which is at least partly sequential.

Thereby, it is advantageously possible to separate the updating of the data base from the distribution of the updated multimedia related data.

Furthermore, it is preferred according to the present invention that during the updating process of one frontend server of the plurality of frontend servers, user queries:
- are either not directed to the one frontend server, or
- the processing of such user queries by the one frontend server is temporarily interrupted.

Thereby, it is advantageously possible to assure a continued availability of the least part of the plurality of frontend severs even while updating the multimedia related information.

Furthermore, the present invention relates to a system for providing multimedia related information to a plurality of users, wherein the users provide search queries to the system and expect receiving search results, the system comprising
- a publication data base server comprising or being assigned to a publication relational data base,
- a plurality of frontend servers comprising each or being assigned each to at least one index file,
   wherein the at least one index file is generated based on the publication relational data base, wherein the at least one index file comprises pre-processed answers to search queries initiated by end user.

Also with regard to the inventive system, it is preferred according to the present invention that at least one search engine is used for generating the search results.

Still furthermore, it is preferred - also with respect to the inventive system according to the present invention - that the at least one index file is a flat file.

According to a further embodiment of the system according to the present invention, it is preferred that in case of a multitude of user search queries per time interval, the multitude of user search queries are handled by the plurality of frontend servers such that a first part of the multitude of user search queries per time interval is handled by a first frontend server and a second part of the multitude of user search queries per time interval is handled by a second frontend server.

Additionally, the present invention relates to a program comprising a computer readable program code for executing a method according to the present invention or for configuring or controlling a system according to the present invention.

Furthermore, the present invention relates to a computer program product comprising a computer-readable storage medium having computer-readable program instructions embodied in the medium for executing a method according to the present invention or for configuring or controlling a system according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

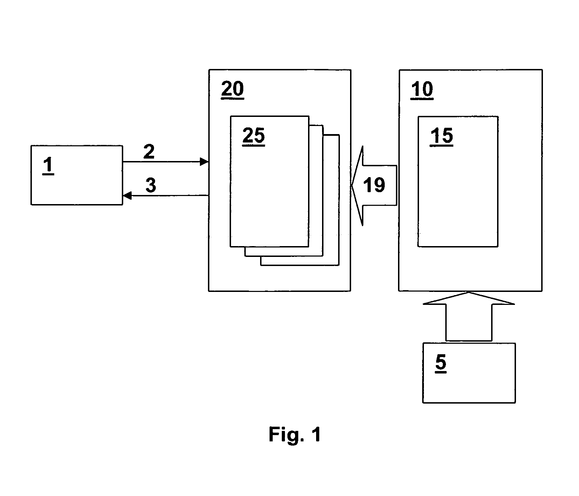

Figure 1 schematically illustrates a system according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

In Figure 1, a system for providing multimedia related information to a plurality of users 1 is schematically shown.

The multimedia related information are, e.g., metadata of multimedia content data such as metadata of video films or television films, especially metadata such as overview information regarding the title, important actors, the genre of the video content (e.g. detective stories, documentaries or the like), sample scenes, pricing information regarding a video on demand usage or regarding the (permanent) purchase of the video content, or the like. A system according to the present invention is also called Content Metadata Directory Service (CMDS).

According to the present invention, it is also possible to provide electronic program guide information as the multimedia related information.

It is important according to the present invention that the multimedia related information are preferably so-called publication data or publication information, i.e. data or information that is to be publicised in (more or less) unchanged form, i.e. the multimedia related information are relatively static information that do not need to be dynamically generated at the reception of a user's request.

Of course, the multimedia related information or data need to be updated on a continuous basis, e.g. for adding further films or multimedia entities to be potentially distributed. Furthermore, such updating of the multimedia related information or data includes the correction of errors in these data and the updating of special parts of the information, especially the pricing information. This is represented in Figure 1 by means of reference sign 5.

The multimedia related information are stored in a publication relational data base 15 of a publication data server 10. Preferably, the publication relational data base 15 is part of the publication data server 10. According to an alternative embodiment, it is possible and preferred according to the present invention that the publication relational data base 15 is only assigned to the publication data server 10, i.e. physically the data base 15 is not located within the publication data server 10.

According to the present invention, the updating operation and the distribution of the multimedia related information are separated. This means that information of the data base 15 is transferred to a plurality of frontend servers 20. The plurality of frontend servers 20 are represented in Figure 1 by one box and reference sign 20. The number of frontend severs 20 present is dependent on the expected load generated by users 1. The users 1 (or more precisely the plurality or even multitude of users 1 are represented in Figure 1 by one box and reference sign 1) provide search queries 2 to the plurality of frontend servers 20 and receive search results 3 from the plurality of frontend servers 20. The search results 3 are based on information of at least one index file 25. The index file 25 or the plurality of index files 25 are stored in the plurality of frontend servers 20. According to an alternative embodiment, it is possible and preferred according to the present invention that the index file25 or the plurality of index files 25 is/are only assigned to the frontend server 20, i.e. physically the index file 25 or plurality of index files 25 is not located within the frontend server 20.

According to the inventive method for providing the multimedia related information stored initially in the data base 15 to the users 1, at least an indexing step and an answering step is executed. The indexing step is executed independently from a received search query of a user 1. The indexing step involves the generation of the index file 25 or the plurality of index files 25 based on the data of the publication relational data base 15. This is done by means of:
- defining a plurality of pieces of search query information (based on possible search queries 2 of the users 1), and
- assigning one piece of search result information or a plurality of pieces of search result information to each piece of search query information.
The piece of search result information or the plurality of pieces of search result information is the bulk of the information returned to the user 1 as a search result 3 after a search query 2. The answering step comprises the use of one of the plurality of frontend servers 20 for returning to the user 1 the one piece of search result information or the plurality of pieces of search result information relating to the search query information.

According to the inventive method for updating an index file 25, the updating process is initiated by means of an update of the publication relational data base 15 (first updating step), e.g. by means of an operator 5. The updating process further comprises a second updating step, namely the updating of the index file 25 or plurality of index files 25 (represented by an arrow 19 in Figure 1). This is done by generating the index file 25 or the plurality of index files based on the updated multimedia related information.

It is important according to the present invention that after the first updating step has occurred, the second updating step
- for a first index file 25 related to a first frontend server 20 and
- for a second index file 25 related to a second frontend server 20
can occur independently from each other. This means that it is possible to perform the second updating step at least partly sequentially.

According to the present invention, it is to be understood that, e.g., a first frontend server, a second frontend server and a third frontend server (each represented by reference sign 20 in Figure 1) provide each at least one index file (i.e. a "first" index file related to the first frontend sever, a "second" index file related to the second frontend server, and a "third" index file related to the third frontend server, the "first", "second" and "third" index files being more or less identical at least regarding the content of the publication relational data base 15). It is also possible the (in this example) each of the frontend servers comprise a plurality of index files 25.

## Claims

1. Method for providing multimedia related information to a plurality of users (1),
wherein the users (1) provide search queries (2) and expect receiving search results (3), wherein a publication data base server (10) and a plurality of frontend servers (20) are used, wherein the publication data base server (10) comprises or is assigned to a publication relational data base (15), wherein the plurality of frontend servers (20) comprise each or is assigned each to at least one index file (25),
- wherein the method comprises an indexing step for generating the index file (25) based on the data of the publication relational data base (15), the indexing step for generating the at least one index file (25) comprising:
- defining a plurality of pieces of search query information,
- assigning one piece of search result information or a plurality of pieces of search result information to each piece of search query information,
- wherein the method further comprises an answering step using the at least one index file (25), the answering step comprising:
- using one of the plurality of frontend servers (20) for
- returning to the user (1) the one piece of search result information or the plurality of pieces of search result information relating to the search query information.

2. Method according to claim 1, wherein the indexing step and the answering step is provided by means of at least one search engine.

3. Method according to one of the preceding claims, wherein the at least one index file (25) is a flat file.

4. Method according to one of the preceding claims, wherein in case of a multitude of user queries per time interval, the multitude of user queries are handled by the plurality of frontend servers (20) such that a first part of the multitude of user queries per time interval is handled by a first frontend server and a second part of the multitude of user queries per time interval is handled by a second frontend server.

5. Method according to one of the preceding claims, wherein the multimedia related information is a multimedia metadata information.

6. Method for updating at least one index file (25) of or assigned to a plurality of frontend servers (20), wherein a publication data base server (10) is used with the plurality of frontend servers (20), wherein the publication data base server (10) comprises or is assigned to a publication relational data base (15),
- wherein the method comprises a first updating step for updating the publication relational data base (15), and
- wherein the method comprises a second updating step for updating the at least one index file (25),
wherein the second updating step comprises an updating process of the plurality of frontend servers (20) which is at least partly sequential.

7. Method according to claim 6, wherein during the updating process of one frontend server of the plurality of frontend servers, user queries:
- are either not directed to the one frontend server, or
- the processing of such user queries by the one frontend server is temporarily interrupted.

8. System for providing multimedia related information to a plurality of users (1),
wherein the users (1) provide search queries (2) to the system and expect receiving search results (3), the system comprising
- a publication data base server (10) comprising or being assigned to a publication relational data base (15),
- a plurality of frontend servers (20) comprising each or being assigned each to at least one index file (25),
wherein the at least one index file (25) is generated based on the publication relational data base (15),
wherein the at least one index file (25) comprises pre-processed answers to search queries (2) initiated by end user (1).

9. System according to claim 8, wherein at least one search engine is used for generating the search results (3).

10. System according to claim 8 or 9, wherein the at least one index file (25) is a flat file.

11. System according to one claims 8 to 10, wherein in case of a multitude of user search queries (2) per time interval, the multitude of user search queries (2) are handled by the plurality of frontend servers (20) such that a first part of the multitude of user search queries (2) per time interval is handled by a first frontend server and a second part of the multitude of user search queries (2) per time interval is handled by a second frontend server.

12. System according to one of the claims 8 to 11, wherein the multimedia related information is a multimedia metadata information.

13. Program comprising a computer readable program code for executing a method according to one of claims 1 to 7 or for configuring or controlling a system according to one of claims 8 to 12.

14. Computer program product comprising a computer-readable storage medium having computer-readable program instructions embodied in the medium for executing a method according to one of claims 1 to 7 or for configuring or controlling a system according to one of claims 8 to 12.
